# EUROPÄISCHE PATENTSCHRIFT

(11) **EP 0 440 282 B1**
(45) Veröffentlichungstag und Bekanntmachung des Hinweises auf die Patenterteilung: **17.04.1996**
(21) Anmeldenummer: 91200104.7
(22) Anmeldetag: 21.01.1991
(51) Int. Cl.: H04N 3/15, H04N 5/32

(54) **Sensormatrix**
Sensormatrix
Matrice de détecteurs

(30) Priorität: 27.01.1990 DE 4002431
(43) Veröffentlichungstag der Anmeldung: 07.08.1991
(73) Patentinhaber: Philips Patentverwaltung GmbH, D-22335 Hamburg (DE); Philips Electronics N.V., NL-5621 BA Eindhoven (NL)
(72) Erfinder: Conrads, Norbert, B-4729 Hauset (BE); Schiebel, Ulrich, Dr., W-5100 Aachen (DE); Wieczorek, Herfried, Dr., W-5100 Aachen (DE)
(74) Vertreter: von Laue, Hanns-Ulrich, Dipl.-Ing.

(56) Entgegenhaltungen:
- EP-A- 0 237 365
- DE-A- 3 531 448
- GB-A- 2 151 878

## Beschreibung

Die Erfindung betrifft eine Anordnung mit in einer Matrix in Zeilen und Spalten angeordneten licht- oder röntgenstrahlenempfindlichen Sensoren, die in Abhängigkeit der auftreffenden Strahlungsmenge Ladungen erzeugen, die jeweils einen elektrischen Schalter aufweisen und die ebenso wie die elektrischen Schalter in Dünnfilmtechnik hergestellt sind, mit je Sensoren-Zeile einer Schaltleitung, über die die Schalter aktivierbar sind, so daß die Ladungen der jeweils aktivierten Senorzeile gleichzeitig über Ausleseleitungen abfließen, und mit Übertragungsmitteln zum Umsetzen der parallel ausgelesenen Signale in ein serielles Signal.

Eine derartige Anordnung ist aus der europäischen Patentschrift 0 028 960 bekannt. Bei dieser bekannten Anordnung ist es vorgesehen, die Ladungen der Sensoren einer Zeile gleichzeitig auszulesen. Dazu ist für die Sensoren eine Schaltung vorgesehen, die die elektrischen Schalter der Sensoren aktiviert, so daß deren Ladungen über je Spalte eine Ausleseleitung abfließen können. Auf diese Weise werden die Ladungen einer Zeile gleichzeitig, d.h. also parallel, ausgelesen. Die so parallel ausgelesenen Ladungen werden Übertragungsmitteln zugeführt, die die parallelen Signale in ein serielles Signal umsetzen. In der europäischen Patentschrift sind dazu für alle Ausleseleitungen ein gemeinsamer Multiplexer oder ein gemeinsames Schieberegister vorgesehen.

Insbesondere für Anwendungen in der Röntgentechnik treffen auf die Sensoren nur sehr geringe Röntgenstrahlendosen.

Infolgedessen ist auch die elektrische Ladung, die in den Sensorelementen in Abhängigkeit der auftreffenden Strahlungsmenge erzeugt wird, nur sehr gering. Infolge dieser sehr geringen auszulesenden Ladungsmengen ergeben sich häufig Probleme, d.h. das ausgelesene Signal ist mit relativ starkem Rauschen überlagert. Um diesem Problem zu begegnen, ist in der europäischen Patentschrift vorgesehen, jedem Sensor einen eigenen Verstärker zuzuordnen. Dieser Verstärker verstärkt also die in dem Sensor erzeugten Ladungen, die dann in verstärkter Form über einen elektrischen Schalter und die zugeordnete Ausleseleitung auslesbar sind.

Es ist Aufgabe der Erfindung, eine verbesserte Anordnung der eingangs genannten Art anzugeben.

Diese Aufgabe ist erfindungsgemäß dadurch gelöst, daß in jeder Ausleseleitung ein auf kristallinen Halbleitern aufgebauter Verstärker vorgesehen ist, der den Übertragungsmitteln vorgeschaltet ist und der während der Auslesevorgänge der an die betreffende Ausleseleitung angeschlossenen Sensoren deren ausgelesene Signale verstärkt.

Bei Sensormatrizen der eingangs genannten Art ergeben sich verschiedene Probleme, die möglichst gleichzeitig zu optimieren sind.

Insbesondere für Anwendungen in der Röntgentechnik, bei der man möglichst geringe Strahlungsdosen einsetzen will, ergeben sich Empfindlichkeitsprobleme der Sensoren. Diese entstehen dadurch, daß der einzelne Sensor für eine möglichst große Strahlungsempfindlichkeit eine möglichst große sensitive Oberfläche aufweisen soll. Dieser Forderung steht jedoch entgegen, daß pro Sensor nicht nur ein Foto-Sensorelement vorzusehen ist, sondern auch eine Kapazität, die die Ladung speichert, sowie ein elektrischer Schalter, der beim Auslesen der Ladung aktiviert wird. Wird nun für jeden Sensor, wie dies beim Stande der Technik vorgesehen ist, ein einzeln zugeordneter Verstärker vorgesehen, so kompliziert sich das einzelne Sensorelement und die strahlungssensitive Fläche des Sensors wird weiter verringert. Auch die andere Möglichkeit, den Verstärker und den eigentlichen Sensor in einem Dünnfilmsubstrat übereinander anzuordnen, ist problematisch, da in diesem Falle, übrigens ebenso wie bei Anordnung nebeneinander auf dem Substrat, mit einer erhöhten Fehlerrate des Substrats bei der Fertigung zu rechnen ist, da das Substrat infolge der Verstärker sehr viel komplizierter wird. Will man beispielsweise eine Sensormatrix mit 2000 x 2000 Elementen fertigen, so dürfte dies, jedenfalls beim gegenwärtigen Stand der Fertigungstechnik, mit zusätzlichen Verstärkern pro Sensorelement mit vertretbarer Ausschußrate nicht möglich sein.

Nach der europäischen Patentschrift 0 028 960 ist vorgesehen, die Verstärker zusammen mit den Sensoren auf einem Dünnfilmsubstrat herzustellen. Die Verstärker sind also auch in Dünnfilmtechnik gebildet. Da aber aus den oben beschriebenen Gründen die Verstärker möglichst rauscharm und empfindlich sein sollen, können auch diese Forderungen bei dieser Anordnung nur sehr schlecht erfüllt werden, da Verstärker in Dünnfilmtechik in dieser Hinsicht problematische Eigenschaften aufweisen.

Der Erfindung liegt nun die Erkenntnis zugrunde, daß sowohl die oben beschriebenen Rausch- wie auch die Fertigungsprobleme mit einer Anordnung gemäß der europäischen Patentschrift 0 028 960 in der Praxis nicht zu bewältigen sind. Es ist daher vorgesehen, in jeder Ausleseleitung der Matrix nur einen Verstärker vorzusehen, der dazu dient, die ausgelesenen Signale aller Sensoren dieser Spalte zu verstärken. Es ist also nicht mehr pro Sensor jeweils ein Verstärker vorgesehen, sondern für eine gesamte Sensorenspalte ein gemeinsamer Verstärker. Dieser Verstärker muß dann auch nicht mehr in Dünnfilmtechnik hergestellt werden, sondern wird vorteilhaft in konventio-neller Halbleiter-Kristall-Technik hergetellt, wobei als Halbleiter z. B. Silizium vorgesehen sein kann. Derartige Verstärker weisen bezüglich ihres Rauschverhaltens und ihrer Empfindlichkeit wesentlich bessere Eigenschaften auf als Dünnfilmverstärker. Durch Einsatz solcher in konven-tioneller Siliziumtechnik hergestellter Verstärker ergibt sich in der Anordnung darüber hinaus der wesentliche Vorteil, daß die Sensormatrix bzw. die einzelnen Sensoren eine einfache Struktur aufweisen, die fertigungstechnisch wesentlich eher zu bewältigen ist als die Struktur nach dem Stande der Technik.

Diese Vorteile ergeben sich durch die Kombination der in Dünnfilmtechnik hergestellten eigentlichen Sensormatrix und der in konventioneller Siliziumtechnik hergestellten Verstärker, von denen pro Ausleseleitung nur einer vorgesehen ist.

Eine vorteilhafte Weiterbildung der Erfindung ist in Anspruch 2 beschrieben. Wie oben bereits beschrieben, soll für eine optimale Signalauswertung das ausgelesene Signal möglichst deutlich über dem Rauschpegel der gesamten Anordnung liegen. Das Rauschen auf den Ausleseleitungen ergibt sich aber insbesondere durch die Leitungen selbst und die mit den Leitungen verbundenen elektrischen Schalter der einzelnen Sensoren, welche, ebenso wie die Ausleseleitungen, Kapazitäten aufweisen, die das Rauschen negativ beeinflussen. Um nun das Rauschen weiter zu vermindern, können pro Spalte vorteilhafterweise mehrere Ausleseleitungen vorgesehen sein. Sind beispielsweise drei Ausleseleitungen vorgesehen, so ist jeweils ein Drittel der Sensorelemente an die einzelne Ausleseleitung angeschlossen. Es ergibt sich damit pro Ausleseleitung eine auch etwa nur ein Drittel so große Kapazität gegenüber der Lösung mit nur einer Ausleseleitung pro Spalte. Es ist aber auch bei mehreren Ausleseleitungen pro Spalte in jeder Ausleseleitung ein Verstärker vorgesehen.

Als besonders vorteilhaft hat sich erwiesen, wie nach einer weiteren Ausgestaltung der Erfindung vorgesehen ist, daß pro Spalte zwei Ausleseleitungen vorgesehen sind und daß die Hälfte der Sensoren jeder Spalte an die eine und die andere Hälfte der Sensoren der Spalte an die andere Ausleseleitung angeschlossen sind. Bei dieser Konfiguration kann eine Ausleseleitung pro Spalte zur einen Seite des Substrats geführt werden, während die andere Ausleseleitung zur anderen Seite des Substrats führt. In diesem Falle müssen in dem Substrat nicht zwei Ausleseleitungen nebeneinander geführt werden und die Ausleseleitungen sind in ihrer Länge optimiert.

Nach einer weiteren Ausgestaltung der Erfindung ist vorgesehen, daß in den Übertragungsmitteln mehrere Analog-Multiplexer vorgesehen sind, welche jeweils mit einem Teil der Ausleseleitungen verbunden sind und welche die in den Ausleseleitungen gleichzeitig auftretenden Auslesesignale in serielle Signale umsetzen.

Zur Umsetzung der parallel ausgelesenen Signale in ein oder mehrere serielle Signale sind Analog-Multiplexer vorgesehen, welche jeweils mit einem Teil der Ausleseleitungen verbunden sind. Die in diesen Ausleseleitungen auftretenden Auslesesignale werden dann mittels der Analog-Multiplexer in ein serielles Signal umgesetzt.

Nach einer weiteren Ausgestaltung der Erfindung ist vorgesehen, daß jedem Analog-Multiplexer je ein A/D-Wandler und jedem A/D-Wandler je ein Mikroprozessor oder Signalprozessor nachgeschaltet ist und daß jeweils zwei Mikroprozessoren, die die Signale benachbarter Sensoren verarbeiten mit einem gemeinsamen Speicher verbunden sind.

Den verschiedenen Analog-Multiplexern ist jeweils ein A/D-Wandler nachgeschaltet, in dem das serielle Ausgangssignal der Analog-Multiplexer in ein digitales Signal umgewandelt wird. Die digitalen Ausgangssignale der A/D-Wandler werden dann von Mikropropzessoren weiter verarbeitet. Dabei ist vorgesehen, daß jeweils zwei Mikroprozessoren, die Signale benachbarter Sensoren verarbeiten, auf einen gemeinsamen Speicher zugreifen.

Auf der Ebene der Analog-Multiplexer werden also die parallel ausgelesenen Signale in mehrere serielle Signale umgesetzt. Diese seriellen Signale werden dann wiederum weiter parallel verarbeitet. Weist eine Sensormatrix beispielsweise 2000 x 2000 einzelne Sensoren auf, so kann ein Analog-Multiplexer beispielsweise 256 Spalten der Matrix verarbeiten. Jeder einzelne Analog-Multiplexer setzt dann also 256 parallele Signale in ein serielles Signal um. Es sind in diesem Falle 8 Analog-Multiplexer vorzusehen, so daß auf der Ebene der A/D-Wandler und der Mikroprozessoren 8 serielle Signale parallel weiterverarbeitet werden. Eine solche Vorgehensweise, bei der quasi innerhalb einzelner Signalgruppen die parallelen Signale in serielle Signale umgesetzt werden, und die dabei entstehenden seriellen Signale wiederum parallel weiterverarbeitet werden, ist insbesondere deshalb vorteilhaft, weil nur so die anfallende große Datenmenge bewältigt werden kann. Bei einem Auslesetakt der Signale von beispielsweise 25 Hz für ein volles Bild, d.h. also für alle Sensoren der Matrix, ergibt sich für die Verarbeitung der Signale nur eine äußerst geringe Zeit, in der eine serielle Verarbeitung der Signale mittels eines einzigen Mikroprozessors nicht möglich ist. Die Signale werden daher erfindungsgemäß in Untergruppen zusammengefaßt und nachfolgend weiterhin parallel verarbeitet.

Nach dieser parallelen Verarbeitung erfolgt dann in einer letzten Stufe eine Umsetzung in ein gemeinsames Gesamt-Video-Signal, das die Signale aller Sensoren der Matrix aufweist. Dazu ist nach einer weiteren Ausgestaltung der Erfindung vorgesehen, daß die mittels der Mikroprozessoren verarbeiteten Sensor-Signale in einem den Mikroprozessoren nachgeschalteten digitalen Multiplexer zu einem Gesamt-Videosignal zusammengefaßt werden.

Nach einer weiteren Ausgestaltung der Erfindung ist vorgesehen, daß mittels der Mikroprozessoren und deren Zugriff auf für benachbarte Sensoren gemeinsame Speicher Korrekturen der von den einzelnen Sensoren gelieferten und anschließend verstärkten Signale in der Weise vorgenommen werden, daß unterschiedliche Empfindlichkeiten der Sensoren, Ausfall einzelner Sensoren oder unterschiedliche Verstärkungsfaktoren der Verstärker ausgeglichen werden.

Da zwei Mikroprozessoren, die Signale von in der Matrix benachbarter Sensoren bearbeiten, auf jeweils einen gemeinsamen Speicher zugreifen können, besteht die Möglichkeit, daß jeder Mikroprozessor die von dem ihm zugeordneten Sensoren gelieferten Signale mit denen benachbarter Sensoren vergleicht. Auf diese Weise kann sowohl eine abweichende Empfindlichkeit eines einzelnen Sensors, wie auch einer gesamten Sensorgruppe, die dann auf einen unterschiedlichen Verstärkungsfaktor des zugeordneten Verstärkers zurückzuführen ist, festgestellt und mittels der Mikroprozessoren korrigiert werden. Sollte ein Sensor ausfallen bzw. kein brauchbares Signal mehr liefern, so kann der Mikroprozessor dessen Signal durch ein errechnetes Signal ersetzen, das sich beispielsweise aus dem Mittelwert der Signale der benachbarten Sensoren ergeben kann.

Nach einer weiteren Ausgestaltung der Erfindung ist vorgesehen, daß auf ein entsprechendes Steuersignal hin mittels der Mikroprozessoren jeweils die Signale mehrerer in Spalten- und/oder Zeilen-Richtung benachbarter Sensoren zu einem Signal zusammengefaßt werden.

Sollte die auf die Sensoren auftreffende Strahlung eine besonders geringe Intensität haben, so können sich trotz des verbesserten Rauschverhaltens der Anordnung gemäß der Erfindung Rauschprobleme ergeben, da die Signale der einzelnen Sensorelemente dann nur noch ungenügend über dem Rauschpegel liegen. In diesem Falle können mittels der Mikroprozessoren die Signale benachbarter Sensoren zusammengefaßt, d.h. addiert werden. Es entsteht dann ein stärkeres Signal, welches einen verbesserten Rauschabstand aufweist. Für bestimmte Anwendungen kann dieses verbesserte Rauschverhalten wichtiger sein, als die sich durch die Zusammenfassung von Signalen benachbarter Sensoren ergebende Reduzierung der von der Matrix gelieferten Auflösung.

Die erfindungsgemäße Anordnung ist insbesondere in einem Röntgen-Untersuchungsgerät besonders vorteilhaft einsetzbar, da für Röntgenstrahluntersuchungen eine besonders geringe Röntgenstrahldosis wünschenswert ist, bei der das günstige Rauschverhalten der erfindungsgemäßen Anordnung voll zum Tragen kommt.

Anhand der Zeichnung wird ein Ausführungsbeispiel der Figur näher erläutert. Es zeigen:
Fig. 1 eine Anordnung mit einem Ausschnitt einer Sensormatrix, mit Siliziumverstärkern und einem Analog-Multiplexer,
Fig. 2 weitere Übertragungsmittel der Anordnung gemäß Fig. 1.

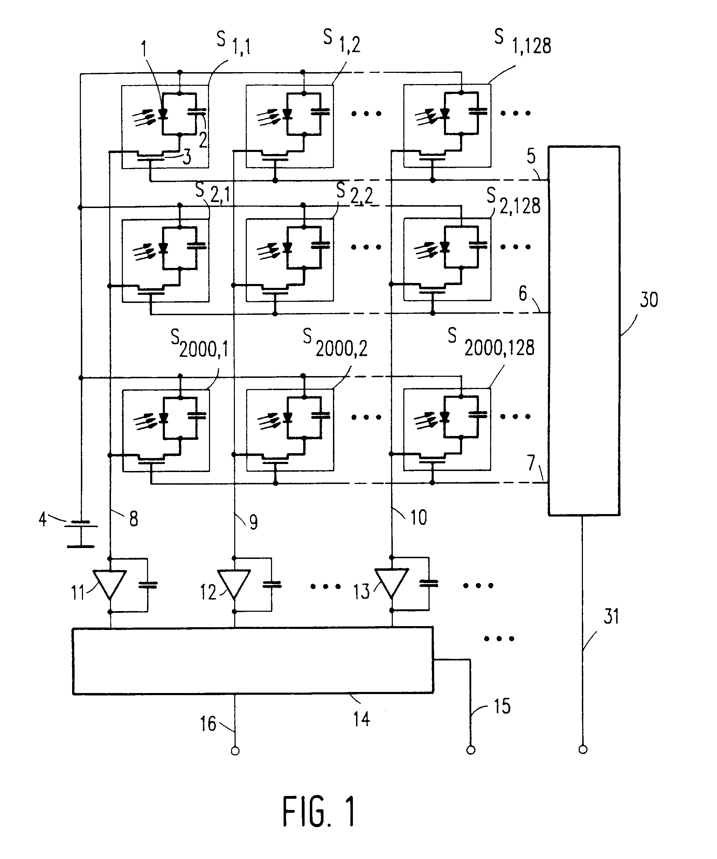

In Fig. 1 ist ein Teil einer Anordnung dargestellt, welche eine nur ausschnittsweise dargestellte Matrix aufweist. Die Matrix besteht aus Sensoren, die in der Matrix in Zeilen und Spalten angeordnet sind. Eine solche Matrix kann beispielsweise 2000 x 2000 Sensoren aufweisen, von denen in der Figur nur einige angedeutet sind.

In der ersten Zeile der in der Figur angedeuteten Matrix sind zunächst Sensoren S_{1,1} sowie S_{1,2} dargestellt. Auf den Sensor S_{1,2} folgen in der gleichen Zeile Sensoren, die nicht dargestellt sind. In der Figur ist dann jedoch wieder der Sensor S_{1,128} dargestellt, welcher der 128. Sensor der ersten Zeile ist. In dieser Zeile folgen dann weitere Sensorelemente bis etwa 2000, die in der Figur nicht mehr dargestellt sind.

Für die zweite Zeile der Matrix gilt entsprechendes wie für die erste; in der Figur sind die Sensoren S_{2,1}, S_{2,2} sowie S_{2,128} dargestellt. Auch diese Zeile weist jedoch insgesamt 2000 Sensorelemente auf.

Auf diese ersten beiden Zeilen von Sensoren folgen weitere, die in der Figur nicht dargestellt sind. In der Figur ist dann lediglich wieder die letzte Zeile dargestellt, nämlich die 2000 Zeile Der erste Sensor in dieser Zeile trägt die Bezeichnung S_{2000,1}, der zweite die Bezeichnung S_{2000,2}. Entsprechend wie in den Zeilen 1 und 2 sind in der Figur weitere Sensoren bis auf den Sensor S_{2000,128} nicht dargestellt. Die jeweils ersten Sensoren einer Zeile bilden zusammen die erste Spalte, die jeweils zweiten Sensoren jeder Zeile zusammen die zweite Spalte usw.

Jeder dieser Sensoren, von denen einige in der Fig. 1 angedeutet sind, weist ein Foto-Sensorelement auf. Dieses Foto-Sensorelement kann bei Einsatz geeigneter Halbleiter selbst bereits röntgenstrahlempfindlich sein. Es kann sich aber auch um eine lichtempfindliche Fotodiode handeln, welche dann Licht empfängt, wenn auf eine über ihr angeordnete Phosphorschicht Röntgenstrahlung trifft. In der Figur sind die Foto-Sensorelemente als Fotodioden 1 angedeutet. Ferner weist jeder Sensor eine Speicherkapazität 2 auf. Die Anode der Fotodiode 1 sowie eine Elektrode der Speicherkapazität 2 sind mit einer Gleichspannungsquelle 4 verbunden, welche diese mit einer negativen Gleichspannung vorspannt. Die Kathode der Fotodiode 1 sowie die andere Elektrode der Speicherkapazität 2 sind beide mit einem Source-Anschluß eines Schalt-Feldeffekttransistors 3 verbunden.

Alle Sensoren der Matrix weisen jeweils eine Fotodiode 1, eine Speicherkapazität 2 sowie einen Feldeffekttransistor 3 auf und sind sämtlich in Dünnfilmtechnik hergestellt.

Bei auf die Fotodioden 1 auftreffender Strahlung wird die Fotodiode leitend und infolge der mittels der Gleichspannungsquelle 4 vorgenommenen Vorspannung wird auf die Speicherkapazität 2 Ladung aufgebracht, deren Größe von der Intensität der auf die Fotodiode 1 auftreffenden Strahlung abhängig ist. Die in der Kapazität 2 nach einer gewissen Zeit gespeicherte Ladung ist also ein Maß für die Strahlungsintensität. Diese Ladung ist über die Schalttransistoren 3 für jedes Sensorelement einzeln auslesbar.

Dazu ist zunächst für jede Zeile der Sensor-Matrix eine Schaltleitung vorgesehen. In der Darstellung gemäß Fig. 1 sind für die erste Zeile eine Schaltleitung 5, für die zweite Zeile eine Schaltleitung 6 und für die 2000 Zeile eine Schaltleitung 7 angedeutet. Diese Schaltleitungen sind mit den Gate-Anschlüssen der Feldeffekttransistoren 3 in den Sensoren verbunden. Eine Schaltleitung aktiviert somit die Transistoren 3 der ihr zugeordneten Zeile. So aktiviert z.B. die Schaltleitung 5 alle Transistoren 3 der ersten Zeile der Matrix.

Die Schaltleitungen 5, 6, 7 und die weiteren in der Figur nicht dargestellten Schaltleitungen sind mittels eines digitalen Dekoders 30 ansteuerbar. Dieser digitale Dekoder 30 dient dazu, bei einem Auslesevorgang der in den Sensoren gespeicherten Ladungen die Zeilen der Sensormatrix nacheinander zu aktivieren. Dies geschieht in der Weise, daß beispielsweise zunächst die Schaltleitung 5 der ersten Zeile aktiviert wird, so daß deren Transistoren leitend geschaltet werden, daß anschließend die Schaltleitung 6 aktiviert wird und die Transistoren 3 der zweiten Zeile zu aktivieren und so fort bis zur 2000 Zeile. Der digitale Dekoder 30 seinerseits wird über eine Steuerleitung 31 gesteuert. Dies kann beispielsweise mittels eines in der Figur nicht dargestellten Mikroprozessors erfolgen, der den Auslesevorgang insgesamt steuert.

Für jede Spalte der in der Fig. 1 ausschnittsweise angedeuteten Matrix ist je eine Ausleseleitung vorgesehen. So weist die erste Spalte, von der in der Figur nur die Sensoren S_{1,1}, S _{2,1} und S_{2000,1} angedeutet sind, eine Ausleseleitung 8 auf. In entsprechender Weise weist die zweite Zeile eine Ausleseleitung 9 und die in der Figur angedeutete 128 Spalte eine Ausleseleitung 10 auf. Auch die in der Figur nicht dargestellten Spalten weisen je eine solche Ausleseleitung auf. Die Ausleseleitungen sind sämtlich mit den Drain-Anschlüssen der Feldeffekttransistoren 3 der jeweils zugeordneten Spalte verbunden. So ist beispielsweise die Ausleseleitung 8 der ersten Spalte mit den Drain-Anschlüssen der Feldeffekttransistoren 3 sämtlicher Sensoren verbunden, die in dieser Spalte angeordnet sind.

In jeder Ausleseleitung, von denen in der Figur nur die Ausleseleitungen 8, 9 und 10 angedeutet sind, ist ein Verstärker vorgesehen. In der Fig. 1 ist in der Ausleseleitung 8 ein Verstärker 11, in der Ausleseleitung 9 ein Verstärker 12 und in der Ausleseleitung 10 ein Verstärker 13 vorgesehen. Die Verstärker sind jeweils in der Ausleseleitung so angeordnet, daß sie die aus den einzelnen Sensoren abfließenden Ladungen verstärken. Diese Verstärker sind einem Analog-Multiplexer 14 vorgeschaltet, dessen Eingänge mit den Ausgängen der Verstärker verbunden sind. Die Verstärker sind als Stromintegratoren verschaltet und in konventioneller Silizium-Kristall-Technik hergestellt.

Wird beispielsweise gerade die erste Zeile ausgelesen, so sind die Feldeffekttransistoren 3 der in dieser Zeile befindlichen Sensoren mittels der Schaltleitung 5 aktiviert. Die in den Kapazitäten 2 der in dieser Zeile vorgesehenen Sensoren gespeicherten Ladungen fließen dann jeweils über den Feldeffekttransistor 3 des jeweiligen Sensors und über die Ausleseleitung ab. Es sind also in diesem Falle alle Sensoren dieser Zeile gleichzeitig aktiviert und die in den Sensoren gespeicherten Ladungen fließen gleichzeitig über die Ausleseleitungen ab. Für die in der Figur angedeuteten Sensoren bedeutet dies, daß Ladungen über die Ausleseleitungen 8, 9 und 10 und die nachgeschalteten Verstärker 11, 12 und 13 zu dem Analog-Multiplexer 14 gelangen. In dem Analog-Multiplexer 14 werden die gleichzeitig und parallel eintreffenden Ladungen in ein serielles Signal umgesetzt, das an einem seriellen Ausgang 15 des Multiplexers zur Verfügung steht. Der Multiplexer 15 ist mittels einer Steuerleitung 16 steuerbar, welche beispielsweise, ebenso wie der digitale Dekoder 8, mittels eines externen, in der Figur nicht dargestellten, Mikroprozessors gesteuert sein kann.

Da in der Figur nur ein relativ kleiner Teil der Matrix dargestellt ist, die insgesamt 2000 x 2000 Sensoren aufweist, ist auch die weitere Verschaltung des Analog-Multiplexers 14 nicht vollständig dargestellt. Auf den Analog-Multiplexer 14 führen nämlich insgesamt 128 Ausleseleitungen, deren Signale der Multiplexer in ein serielles Ausgangssignal umwandelt, das am Ausgang 15 anliegt. Da die Matrix insgesamt 2000 Spalten aufweist, sind insgesamt 16 solcher Analog-Multiplexer erforderlich, von denen in der Figur jedoch nur einer dargestellt ist.

Bei einem Auslesevorgang der Sensor-Matrix werden die Zeilen nacheinander aktiviert, wobei bei Aktivierung einer Zeile jeweils die Ladungen sämtlicher in den Sensoren dieser Zeile gespeicherter Ladungen abfließen. Anschließend wird die nächste Zeile aktiviert, so daß wiederum die in den Sensoren dieser Zeile gespeicherten Ladungen abfließen. Dieser Vorgang wiederholt sich bis zur 2000 Zeile. Bei jedem Auslesevorgang werden mittels der Analog-Multiplexer die parallel eintreffenden Signale der Sensoren in ein serielles Signal umgewandelt. Dies geschieht wegen der Vielzahl der Sensoren gruppenweise zu je 128 Sensoren. Da insgesamt 16 Analog-Multiplexer vorgesehen sind, entstehen so 16 serielle Signale, welche jeweils die Signale von 128 Sensoren einer Zeile beinhalten.

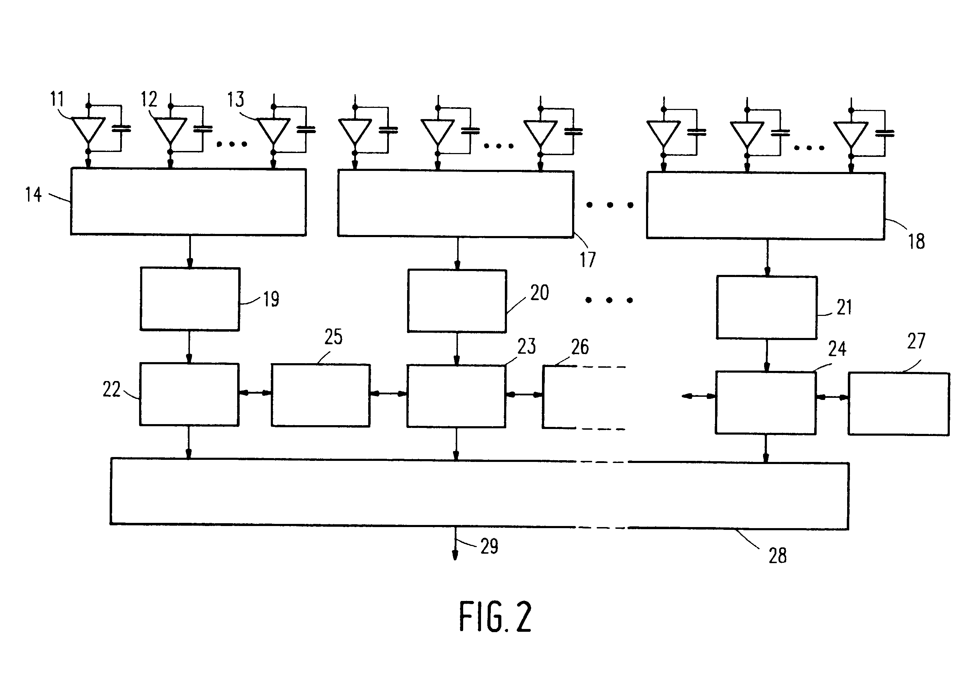

In der Fig. 2 sind weitere zu der Anordnung gemäß Fig. 1 gehörige Übertragungsmittel dargestellt. Die Fig. 2 zeigt nochmals die Verstärker 11, 12 und 13 sowie den Analog-Multiplexer 14 gemäß Fig. 1. Da jedoch, wie oben bereits erläutert, je Zeile 2000 Sensorelemente vorgesehen sind, sind in den Übertragungsmitteln insgesamt 16 Analog-Multiplexer vorgesehen. In der Fig. 2 sind von diesen Multiplexern der Multiplexer 14, ein weiterer Multiplexer 17 und schließlich ein Multiplexer 18 vorgesehen. Jeder dieser Analog-Multiplexer 17 und 18 sowie der weiteren in der Figur nicht dargestellten Analog-Multiplexer weist ebenso wie der Multiplexer 14 jeweils 128 Eingänge auf, denen Verstärker vorgeschaltet sind, deren Eingänge wiederum mit den Ausleseleitungen mit der jeweiligen Spalte verbunden sind.

Jedem der Analog-Multiplexer ist jeweils ein Analog-Digital-Wandler nachgeschaltet. In der Fig. 2 ist ein Analog-Digital-Wandler 19 angedeutet, der dem Multiplexer 14 nach geschaltet ist, sowie ein Analog-Digital-Wandler 20, der dem Analog-Multiplexer 17 nachgeschaltet ist. Entsprechendes gilt für die weiteren in der Figur nicht dargestellten Analog-Multiplexer. Als letzter Analog-Multiplexer ist in der Figur der Multiplexer 18 dargestellt, dem ein A/D-Wandler 21 nachgeschaltet ist.

Dem A/D-Wandler 19 ist ein Mikroprozessor 22 nachgeschaltet, dem A/D-Wandler 20 ein Mikroprozessor 23 und dem A/D-Wandler 21 ein Mikroprozessor 24. Auch den übrigen, in der Figur nicht dargestellten A/D-Wandlern, ist je ein Mikroprozessor nachgeschaltet. Die Mikroprozessoren 22 und 23 greifen auf einen gemeinsamen Speicher 25 zu. Der Mikroprozessor 23 greift ferner auf einen Speicher 26 zu, auf den auch, in in der Figur nicht dargestellter Weise, ein weiterer Mikroprozessor zugreift. Auch der Mikroprozessor 24 greift auf zwei Speicher zu, von denen in der Figur nur ein Speicher 27 dargestellt ist.

Die Mikroprozessoren dienen dazu, die von den A/D-Wandlern gelieferten digitalen Signale, welche auf die in den Sensoren ausgelesenen Signale zurückgehen, weiter zu verarbeiten. Es können dabei beispielsweise verschiedene Empfindlichkeiten der Sensoren, verschiedene Empfindlichkeiten der Verstärker oder andere Fehler ausgeglichen werden. Dieses ist möglich, da jeder der Mikroprozessoren auf einen Speicher zugreifen kann, in dem nicht nur die Signale der ihm zugeordneten Sensoren abgespeichert sind, sondern auch die Signale der benachbarten Sensoren, die an sich von einem anderen Mikroprozessor verarbeitet werden. So kann beispielsweise der Mikroprozessor 22 auf den Speicher 25 zugreifen, in dem aber auch die Signale abgespeichert sind, die von dem Mikroprozessor 23 verarbeitet werden und die von Sensoren stammen, die denen, deren Signale der Mikroprozessor 22 verarbeitet, in der Matrix benachbart angeordnet sind. Durch Vergleich der Signale benachbarter Sensoren ist es möglich, auf verschiedene Empfindlichkeiten der Sensoren bzw. der Verstärker zu schließen. Ferner sind die Mikroprozessoren in der Lage, den Ausfall einzelner Sensorelemente festzustellen. Deren Signale können dann beispielsweise durch gemittelte Signale der benachbarten Sensoren ersetzt werden. Nach dieser Bearbeitung liefert jeder der Mikroprozessoren ein Ausgangssignal der Sensoren der ihm zugeordneten Spalten. Diese digitalen Ausgangssignale sind einem Digital-Multiplexer 28 zugeführt, in dem die von den 8 Mikroprozessoren eintreffenden 8 Signale wiederum zu einem Gesamt-Signal zusammengesetzt werden, das seriellen Charakter hat. Dieses Signal steht dann an einem Ausgang 29 des Digitalmultiplexers 28 zur Verfügung und stellt das Gesamt-Video-Signal der Anordnung dar, daß die Signale sämtlicher Sensoren der Matrix beinhaltet.

## Patentansprüche

1. Anordnung mit in einer Matrix in Zeilen und Spalten angeordneten licht- oder röntgenstrahlenempfindlichen Sensoren (S_{1,1,} ... S_{2000, 2000}), die in Abhängigkeit der auftreffenden Strahlungsmenge Ladungen erzeugen, die jeweils einen elektrischen Schalter (3) aufweisen und die ebenso wie die elektrischen Schalter (3) in Dünnfilmtechnik hergestellt sind, mit je Sensoren-Zeile einer Schaltleitung (5, 6, ..., 7), über die die Schalter (3) aktivierbar sind, so daß die Ladungen der jeweils aktivierten Sensorzeile gleichzeitig über Ausleseleitungen (8, 9, ..., 10, ...) abfließen, und mit Übertragungsmitteln zum Umsetzen der parallel ausgelesenen Signale in ein serielles Signal,
dadurch gekennzeichnet, daß in jeder Ausleseleitung (8, 9, ..., 10, ...) ein mit kristallinen Halbleitern aufgebauter Verstärker (11, 12, ..., 13, ...) vorgesehen ist, der den Übertragungsmitteln vorgeschaltet ist und der während der Auslesevorgänge der an die betreffende Ausleseleitung (8, 9, .., 10, ...) angeschlossenen Sensoren (s_{1,1} ... S_{2000, 2000}) deren ausgelesene Signale verstärkt.

2. Anordnung nach Anspruch 1,
dadurch gekennzeichnet, daß pro Spalte mehrere Ausleseleitungen vorgesehen sind und daß jeweils etwa die gleiche Zahl von Sensoren an die verschiedenen Ausleseleitungen der Spalte angeschlossen ist und daß in jeder Ausleseleitung ein Verstärker vorgesehen ist.

3. Anordnung nach Anspruch 2,
dadurch gekennzeichnet, daß pro Spalte zwei Ausleseleitungen vorgesehen sind und daß die Hälfte der Sensoren jeder Spalte an die eine und die andere Hälfte der Sensoren der Spalte an die andere Ausleseleitung angeschlossen sind.

4. Anordnung nach einem der Ansprüche 1 bis 3,
dadurch gekennzeichnet, daß in den übertragungsmitteln mehrere Analog-Multiplexer (14) vorgesehen sind, welche jeweils mit einem Teil der Ausleseleitungen (8, 9, ..., 10, ...) verbunden sind und welche die in den Ausleseleitungen (8, 9, ..., 10, ...) gleichzeitig auftretenden Auslesesignale in serielle Signale umsetzen.

5. Anordnung nach Anspruch 4,
dadurch gekennzeichnet, daß jedem Analog-Multiplexer (14, 15, ..., 18) je ein A/D-Wandler (19, 20, ..., 21) und jedem A/D-Wandler (19, 20, ..., 21) je ein Signalprozessor oder Mikroprozessor (22, 23, ..., 24) nachgeschaltet sind und daß jeweils zwei Mikroprozessoren, die die Signale benachbarter Sensoren verarbeiten, mit einem gemeinsamen Speicher (25, 26, ..., 27) verbunden sind.

6. Anordnung nach Anspruch 5,
dadurch gekennzeichnet, daß die mittels der Mikroprozessoren (22, 23, ..., 24) verarbeiteten Sensor-Signale in einem den Mikroprozessoren (22, 23, ..., 24) nachgeschalteten digitalen Multiplexer (28) zu einem Gesamt-Videosignal zusammengefaßt werden.

7. Anordnung nach Anspruch 5 oder 6,
dadurch gekennzeichnet, daß mittels der Mikroprozessoren (22, 23 ..., 24) und deren Zugriff auf für benachbarte Sensoren gemeinsame Speicher (25, 26, ..., 27) Korrekturen der von den einzelnen
Sensoren (S_{1,1} ... S_{2000, 2000}) gelieferten und anschließend verstärkten Signale in der Weise vorgenommen werden, daß unterschiedliche Empfindlichkeiten der Sensoren, Ausfall einzelner Sensoren oder unterschiedliche Verstärkungsfaktoren der Verstärker (11, 12, ..., 13, ...) ausgeglichen werden.

8. Anordnung nach einem der Ansprüche 4 bis 7,
dadurch gekennzeichnet, daß die Verstärker (11, 12, ..., 13, ...) in den Ausleseleitungen (8, 9, ..., 10, ...) und die ihnen nachgeschalteten Analog-Multiplexer (14, 17, ..., 18) in integrierten Schaltungen in der Weise zusammengefaßt werden, daß jeweils ein Analog-Multiplexer (14, ...) und die diesem zugeordneten Verstärker (11, 12, ..., 13, ...) in einem integrierten Schaltkreis aufgebaut sind.

9. Anordnung nach einem der Ansprüche 5 bis 8,
dadurch gekennzeichnet, daß auf ein entsprechendes Steuersignal mittels der Mikroprozessoren (22, 23, ..., 24) jeweils die Signale mehrerer in Spalten- und/oder Zeilen-Richtung benachbarter Sensoren zu einem Signal zusammengefaßt werden.

10. Anordnung nach einem der Ansprüche 1 bis 9,
dadurch gekennzeichnet, daß die Verstärker (11, 12, ..., 13, ...) als Stromintegratoren geschaltet sind.

11. Verwendung der Anordnung nach einem der Ansprüche 1 bis 10 in einem Röntgen-Untersuchungsgerät.

## Claims

1. A device comprising light-sensitive or X-ray sensitive sensors (S_{1,1}, ... S_{2000,2000}) which are arranged in rows and columns in a matrix and which generate charges in dependence on the incident amount of radiation, each of said sensors comprising an electric switch (3) and being constructed, like the electric switches (3), by means of a thin-film technique, for each sensor row there being provided a switching line (5, 6, ..., 7) via which the switches (3) can be activated so that the charges of the relevant activated sensor row are simultaneously output via read lines (8, 9, ..., 10, ...), and also comprising transfer means for converting the signals read in parallel into a serial signal, characterized in that in each read line (8, 9 ..., 10, ...) there is provided an amplifier (11, 12 ..., 13, ...) which is composed of crystalline semiconductors, precedes the transfer means, and amplifies, during the read operations, the signals read from the sensors (S_{1,1} ..., S_{2000,2000}) connected to the relevant read line (8, 9 10, ...).

2. A device as claimed in Claim 1, characterized in that a plurality of read lines are provided per column, that each time approximately the same number of sensors is connected to the various read lines of the column, and that an amplifier is provided in each read line.

3. A device as claimed in Claim 2, characterized in that for each column there are provided two read lines, half the number of sensors of each column being connected to one read line, the other half of the sensors of the column being connected to the other read line.

4. A device as claimed in any one of the Claims 1 to 3, characterized in that the transfer means comprise several analog multiplexers (14), each of which is connected to a respective part of the read lines (8, 9, ..., 10, ...) and converts the read signals simultaneously occurring in the read lines (8, 9, ... 10, ...) into serial signals.

5. A device as claimed in Claim 4, characterized in that each analog multiplexer (14, 15 ..., 18) is succeeded by a respective A/D converter (19, 20 ..., 21), each AID converter (19, 20, ..., 21) being succeeded by a respective signal processor or microprocessor (22, 23, ..., 24), each time two microprocessors which process the signals from neighbouring sensors being connected to a common memory (25, 26, ..., 27).

6. A device as claimed in Claim 5, characterized in that the sensor signals processed by the microprocessors (22, 23 ..., 24) are combined so as to form an overall video signal in a digital multiplexer (28) succeeding the microprocessors (22, 23, ..., 24).

7. A device as claimed in Claim 5 or 6, characterized in that the signals supplied by the individual sensors (S_{1,1}, ... S_{2000,2000}) and subsequently amplified are corrected by way of the microprocessors (22, 23, ..., 24) and their accessing of common memories (23, 26, ..., 27) for neighbouring sensors, so that differences in sensitivity of the sensors, breakdown of individual sensors, or differences in gain factors of the amplifiers (11, 12 .... 13, ...) are compensated for.

8. A device as claimed in any one of the Claims 4 to 7, characterized in that the amplifiers (11, 12, ..., 13, ...) in the read lines (8, 9, ... , 10, ...) and the subsequent analog multiplexers ( 14, 17 ..., 18) are combined in integrated circuits in such a manner that each time an analog multiplexer (14, ...) and its associated amplifiers (11, 12, ..., 13, ...) are built up an integrated circuit.

9. A device as claimed in any one of the Claims 5 to 8, characterized in that in response to an appropriate control signal, each time the signals of several sensors which neighbour one another in the column direction and/or row direction are combined by the microprocessors (22, 23, ..., 24) so as to form one signal.

10. A device as claimed in any one of the Claims 1 to 9, characterized in that the amplifiers (11, 12, ..., 13, ...) are connected as current integrators.

11. The use of a device as claimed in any one of the Claims 1 to 10 in an X-ray examination apparatus.

## Revendications

1. Montage comportant des capteurs (S_{1,1}, ... S_{2000,2000}) sensibles à la lumière ou aux rayons X agencés selon une matrice de rangées et de colonnes, lesdits capteurs produisant des charges en fonction de la quantité de rayonnement qu'ils reçoivent, comportant chacun un commutateur électrique (3) et étant fabriqués, tout comme les commutateurs électriques (3), en technique des couches minces, avec pour chaque rangée de capteurs, une ligne de commutation (5, 6, ..., 7) par l'intermédiaire de laquelle les commutateurs (3) peuvent être activés, de telle sorte que les charges de la rangée de capteurs respectivement activés s'écoulent simultanément via des lignes de lecture (8, 9, ..., 10, ...), et avec des moyens de transmission pour convertir les signaux lus en parallèle en un signal sériel, caractérisé en ce que, dans chaque ligne de lecture (8, 9, ..., 10, ...), il est prévu un amplificateur (11, 12, ..., 13, ...) formé par des semi-conducteurs cristallins, qui est connecté en amont des moyens de transmission et qui amplifie les signaux lus des capteurs (S_{1,1}, ..., S_{2000,2000}) au cours des opérations de lecture des capteurs connectés à la ligne de lecture (8, 9, ..., 10,...) concernée.

2. Montage selon la revendication 1, caractérisé en ce que plusieurs lignes de lecture sont prévues par colonne, en ce que, respectivement, à peu près le même nombre de capteurs est raccordé aux diverses lignes de lectures de la colonne et en ce que dans chaque ligne de lecture est prévu un amplificateur.

3. Montage selon la revendication 2, caractérisé en ce qu'il est prévu deux lignes de lecture par colonne et en ce que la moitié des capteurs de chaque colonne est connectée à la première ligne de lecture et l'autre moitié des capteurs de la colonne à l'autre ligne de lecture.

4. Montage selon l'une quelconque des revendications 1 à 3, caractérisé en ce que dans les moyens de transmission sont prévus plusieurs multiplexeurs analogiques (14) qui sont respectivement connectés à une partie des lignes de lecture (8, 9, ..., 10, ...) et qui convertissent les signaux de lecture apparaissant simultanément dans les lignes de lecture (8, 9, ..., 10, ...) en signaux sériels.

5. Montage selon la revendication 4, caractérisé en ce qu'en aval de chaque multiplexeur analogique (14, 15, ..., 18) est connecté respectivement un convertisseur A/D (19, 20, ..., 21) et en aval de chaque convertisseur A/D (19, 20, ..., 21) respectivement un microprocesseur ou un processeur de signaux (22, 23,..., 27) et en ce que respectivement deux microprocesseurs, qui traitent les signaux de capteurs voisins sont connectés, à une mémoire commune (25, 26, ..., 27).

6. Montage selon la revendication 5, caractérisé en ce que les signaux des capteurs traités à l'aide des microprocesseurs (22, 23, ..., 24) en un signal vidéo global sont regroupés dans un multiplexeur numérique (28) monté en aval des microprocesseurs (22, 23, ..., 24).

7. Montage selon la revendication 5 ou 6, caractérisé en ce que, à l'aide des microprocesseurs (22, 23, ..., 24) et de leur accès à des mémoires communes (25, 26, 27) pour des capteurs voisins, des corrections des signaux délivrés par les capteurs individuels (S_{1,1}, ..., S_{2000,2000}) et ensuite amplifiés sont effectuées, et en ce que les différentes sensibilités de capteurs, la défaillance de certains capteurs ou différents facteurs d'amplification des amplificateurs (11, 12, ..., 13, ...) sont compensés.

8. Montage selon l'une quelconque des revendications 4 à 7, caractérisé en ce que les amplificateurs (11, 12,..., 13,...) dans les lignes de lecture (8, 9 ..., 10, ...) et les multiplexeurs analogiques (14, 17, ..., 18), qui sont raccordés en aval de celles-ci, sont regroupés dans des circuits intégrés de telle sorte que, respectivement, un multiplexeur analogique (14, ...) et l'amplificateur (11, 12, ..., 13,...) qui lui est affecté soient montés dans un circuit intégré.

9. Montage selon l'une quelconque des revendications 5 à 8, caractérisé en ce que, par un signal de commande correspondant, à l'aide des microprocesseurs (22, 23, ..., 24), respectivement, les signaux de plusieurs capteurs voisins dans la direction des colonnes et/ou dans la direction des rangées sont regroupés en un seul signal.

10. Montage selon l'une quelconque des revendications 1 à 9, caractérisé en ce que les amplificateurs (11, 12,..., 13,...) sont connectés en intégrateurs de courant.

11. Utilisation du montage selon l'une quelconque des revendications 1 à 10 dans un appareil d'examens radiographiques.
